# EUROPEAN PATENT SPECIFICATION

(11) **EP 2 972 787 B1**
(45) Date of publication and mention of the grant of the patent: **14.11.2018**
(21) Application number: 14719128.2
(22) Date of filing: 10.03.2014
(51) Int. Cl.: G06F 9/30

(54) **ELIMINATING REDUNDANT SYNCHRONIZATION BARRIERS IN INSTRUCTION PROCESSING CIRCUITS, AND RELATED PROCESSOR SYSTEMS, METHODS, AND COMPUTER-READABLE MEDIA**
BESEITIGUNG REDUNDANTER SYNCHRONISATIONSBARRIEREN BEI ANWEISUNGSVERARBEITUNGSSCHALTUNGEN UND ZUGEHÖRIGE PROZESSORSYSTEME, VERFAHREN UND COMPUTERLESBARE MEDIEN
SUPPRESSION DE BARRIÈRES DE SYNCHRONISATION REDONDANTES DANS DES CIRCUITS DE TRAITEMENT D'INSTRUCTIONS, ET SYSTÈMES INFORMATIQUES, PROCÉDÉS ET SUPPORTS LISIBLES PAR UN ORDINATEUR ASSOCIÉS

(30) Priority: 14.03.2013 US 201313829315
(43) Date of publication of application: 20.01.2016
(73) Proprietor: Qualcomm Incorporated, San Diego, CA 92121 (US)
(72) Inventor: BROWN, Melinda, J., San Diego California 92121 (US); DIEFFENDERFER, James, Norris, San Diego California 92121 (US); MCILVAINE, Michael, Scott, San Diego California 92121 (US); STEMPEL, Brian, Michael, San Diego California 92121 (US); STREETT, Daren, Eugene, San Diego California 92121 (US)
(74) Representative: Tomkins & Co
(86) International application number: PCT/US2014/022457
(87) International publication number: WO 2014/159195

(56) References cited:
- US-A1- 2004 154 006
- US-A1- 2011 145 304
- US-A1- 2011 145 512

## Description

### PRIORITY APPLICATION

The present application claims priority to U.S. Patent Application Serial Number 13/829,315, filed March 14, 2013, entitled "ELIMINATING REDUNDANT SYNCHRONIZATION BARRIERS IN INSTRUCTION PROCESSING CIRCUITS, AND RELATED PROCESSOR SYSTEMS, METHODS, AND COMPUTER-READABLE MEDIA,".

### BACKGROUND

### I. Field of the Disclosure

The technology of the disclosure relates to processing of pipelined computer instructions in central processing unit (CPU)-based systems.

### II. Background

The advent of "instruction pipelining" in modern computer architectures has yielded improved utilization of central processing unit (CPU) resources and faster execution times of computer applications. Instruction pipelining is a processing technique whereby a throughput of computer instructions being processed by a CPU may be increased by splitting the processing of each instruction into a series of steps. The instructions are executed in an "execution pipeline" composed of multiple stages, with each stage carrying out one of the steps for each of a series of instructions. As a result, in each CPU clock cycle, steps for multiple instructions can be evaluated in parallel. A CPU may employ multiple execution pipelines to further boost performance.

Some computer architectures that implement instruction pipelining may permit processor optimizations, such as speculative data reads and out-of-order execution of program instructions. While providing further CPU performance improvement, these optimizations may lead to unintended and/or undesirable program behavior if, for example, the executing program depends on data being accessed or instructions being executed in a specified order. Additionally, an executing instruction may effect a change in a state of the CPU that must be successfully completed before subsequent instructions are allowed to execute. For example, a change in a state of the CPU may include changes that affect how the subsequent instructions access resources, such as a change in processor mode or a modification of a page table.

To ensure proper program execution, a "synchronization barrier" may be used in software to ensure that a prior operation (i.e., a data access or instruction execution) completes before code execution is permitted to continue. A synchronization barrier may be expressly provided by an instruction, such as the ARM architecture ISB (instruction synchronization barrier) instruction, or may be implemented as part of another instruction or operation. A computer's architecture may provide that specific operations requiring a synchronization barrier may have the synchronization automatically handled by the computer's hardware, while other operations require software to expressly include a synchronization barrier. Note however, that for scenarios in which a software synchronization barrier is present, the software synchronization barrier may prove redundant if another synchronization operation occurs immediately prior to execution of the software synchronization barrier. US 2011/145512 discloses a method for eliminating redundant synchronization barriers.

### SUMMARY OF THE DISCLOSURE

Embodiments of the disclosure include eliminating redundant synchronization barriers from execution pipelines in instruction processing circuits, and related processor systems, methods, and computer-readable media. For some operations, a computer's architecture may require that a software synchronization barrier be employed, even though a synchronization operation may also occur immediately prior to execution of the software synchronization barrier. By tracking the occurrence of synchronization events, unnecessary software synchronization barriers may be identified and eliminated, thus improving performance of a central processing unit (CPU).

In this regard, in one embodiment, a method for eliminating redundant synchronization barriers in an instruction stream is provided. The method comprises detecting a first synchronization event. The method further comprises detecting a next instruction in an instruction stream. The method additionally comprises determining whether the next instruction comprises a synchronization barrier of a type corresponding to the first synchronization event. The method also comprises eliminating the next instruction from the instruction stream, responsive to determining that the next instruction comprises a synchronization barrier of a type corresponding to the first synchronization event. In this manner, the average number of instructions executed during each clock cycle by the CPU may be increased by avoiding unnecessary synchronization operations.

In another embodiment, an instruction processing circuit is provided. The instruction processing circuit comprises a synchronization event detection circuit and an optimization circuit. The synchronization event detection circuit is configured to detect a first synchronization event. The optimization circuit is configured to detect a next instruction in an instruction stream, and determine whether the next instruction comprises a synchronization barrier of a type corresponding to the first synchronization event. The optimization circuit is further configured to eliminate the next instruction from the instruction stream, responsive to determining that the next instruction comprises a synchronization barrier of a type corresponding to the first synchronization event.

In another embodiment, an instruction processing circuit is provided. The instruction processing circuit comprises a means for detecting a first synchronization event. The instruction processing circuit further comprises a means for detecting a next instruction in an instruction stream. The instruction processing circuit additionally comprises a means for determining whether the next instruction comprises a synchronization barrier of a type corresponding to the first synchronization event. The instruction processing circuit also comprises a means for eliminating the next instruction from the instruction stream, responsive to determining that the next instruction comprises a synchronization barrier of a type corresponding to the first synchronization event.

In another embodiment, a non-transitory computer-readable medium is provided, having stored thereon computer-executable instructions to cause a processor to implement a method. The method implemented by the computer-executable instructions comprises detecting a first synchronization event. The method implemented by the computer-executable instructions further comprises detecting a next instruction in an instruction stream. The method implemented by the computer-executable instructions additionally comprises determining whether the next instruction comprises a synchronization barrier of a type corresponding to the first synchronization event. The method implemented by the computer-executable instructions also comprises eliminating the next instruction from the instruction stream, responsive to determining that the next instruction comprises a synchronization barrier of a type corresponding to the first synchronization event.

### BRIEF DESCRIPTION OF THE FIGURES

Figure 1 is a block diagram of exemplary components provided in a processor-based system, including an exemplary instruction processing circuit configured to detect and eliminate redundant synchronization barriers in an instruction stream;
Figure 2 is a diagram illustrating an exemplary optimized instruction stream based on detecting and eliminating redundant synchronization barriers;
Figure 3 is a flowchart illustrating an exemplary process of an instruction processing circuit for detecting and eliminating redundant synchronization barriers;
Figure 4 is a flowchart illustrating a more detailed exemplary process of an instruction processing circuit for eliminating redundant synchronization barriers;
Figure 5 is a diagram illustrating optimization of an exemplary instruction stream containing an instruction triggering a synchronization event and a redundant synchronization barrier;
Figure 6 is a diagram illustrating exemplary optimized instruction streams that may result from elimination of redundant synchronization barriers;
Figure 7 is a diagram illustrating optimization of an exemplary instruction stream containing a redundant synchronization barrier; and
Figure 8 is a block diagram of an exemplary processor-based system that can include instruction processing circuits, including the instruction processing circuit of Figure 1, configured to detect and eliminate redundant synchronization barriers.

### DETAILED DESCRIPTION

With reference now to the drawing figures, several exemplary embodiments of the present disclosure are described. The word "exemplary" is used herein to mean "serving as an example, instance, or illustration." Any embodiment described herein as "exemplary" is not necessarily to be construed as preferred or advantageous over other embodiments. It is also to be understood that, although the terms "first," "second," etc. may be used herein to describe various elements, these terms are only used to distinguish one element from another, and the elements thus distinguished are not to be limited by these terms. For example, a first instruction could be termed a second instruction, and, similarly, a second instruction could be termed a first instruction, without departing from the teachings of the disclosure.

Embodiments of the disclosure include eliminating redundant synchronization barriers from execution pipelines in instruction processing circuits, and related processor systems, methods, and computer-readable media. For some operations, a computer's architecture may require that a software synchronization barrier be employed, even though a synchronization operation may also occur immediately prior to execution of the software synchronization barrier. By tracking the occurrence of synchronization events, unnecessary software synchronization barriers may be identified and eliminated, thus improving performance of a central processing unit (CPU).

In this regard, in one embodiment, a method for eliminating redundant synchronization barriers in an instruction stream is provided. The method comprises detecting a first synchronization event. The method further comprises detecting a next instruction in an instruction stream. The method additionally comprises determining whether the next instruction comprises a synchronization barrier of a type corresponding to the first synchronization event. The method also comprises eliminating the next instruction from the instruction stream, responsive to determining that the next instruction comprises a synchronization barrier of a type corresponding to the first synchronization event. In this manner, the average number of instructions executed during each clock cycle by the CPU may be increased by avoiding unnecessary synchronization operations.

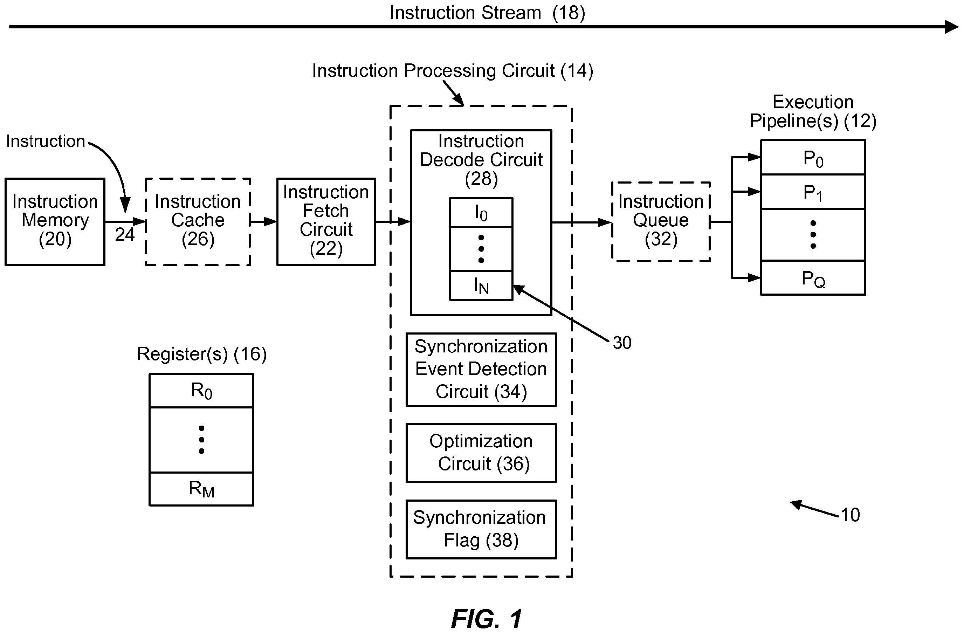

In this regard, Figure 1 is a block diagram of an exemplary processor-based system 10 for retrieving and processing computer instructions to be placed into one or more execution pipelines 12(0)-12(Q). The processor-based system 10 provides an instruction processing circuit 14 that is configured to detect and eliminate redundant synchronization barriers. As used herein, an "instruction" may refer to a combination of bits defined by an instruction set architecture that direct a computer processor to carry out a specified task or tasks. For example, an instruction may indicate operations for reading data from and/or writing data to registers 16(0)-16(M), which provide local storage accessible by the processor-based system 10. Exemplary instruction set architectures include, but are not limited to, ARM, Thumb, and A64 architectures.

With continuing reference to Figure 1, instructions are processed in the processor-based system 10 in a continuous flow represented by an instruction stream 18. The instruction stream 18 may be continuously processed as the processor-based system 10 is operating and executing the instructions. In this illustrated example, the instruction stream 18 begins with an instruction memory 20, which provides persistent storage for instructions in a computer-executable program. An instruction fetch circuit 22 reads an instruction represented by arrow 24 (hereinafter "instruction 24") from the instruction memory 20 and/or optionally from an instruction cache 26. The instruction fetch circuit 22 may increment a program counter (not shown), which may be stored in one of the registers 16(0)-16(M). Once the instruction 24 is fetched by the instruction fetch circuit 22, the instruction 24 proceeds to an instruction decode circuit 28 that translates the instruction into processor-specific microinstructions. In this embodiment, the instruction decode circuit 28 stores a group of multiple instructions 30(0)-30(N) simultaneously for decoding.

After the instructions 30(0)-30(N) have been fetched and decoded, they are optionally issued to an instruction queue 32 as a buffer for storing the instructions 30(0)-30(N). The instructions 30(0)-30(N) are then issued to one of the execution pipelines 12(0)-12(Q) for execution. In some embodiments, the execution pipelines 12(0)-12(Q) may restrict the types of operations that may be carried out by instructions that execute within the execution pipelines 12(0)-12(Q). For example, pipeline P₀ may not permit read access to the registers 16(0)-16(M); accordingly, an instruction that indicates an operation to read register R₀ may only be issued to one of the execution pipelines P₁ through P_{Q}.

The instruction processing circuit 14 may be any type of device or circuit, and may be implemented or performed with a processor, a digital signal processor (DSP), an Application Specific Integrated Circuit (ASIC), a field-programmable gate array (FPGA) or other programmable logic device, discrete gate or transistor logic, discrete hardware components, or any combination thereof designed to perform the functions described herein. In some embodiments, the instruction processing circuit 14 is incorporated into the instruction decode circuit 28.

With continuing reference to Figure 1, the instruction processing circuit 14 in this example is configured to detect and eliminate redundant synchronization barriers in the instruction stream 18. The instruction processing circuit 14 may employ a synchronization event detection circuit 34 configured to detect a synchronization event. The instruction processing circuit 14 may also employ an optimization circuit 36 configured to detect a next instruction indicating a redundant synchronization barrier of a type corresponding to the synchronization event. The optimization circuit 36 may be further configured to eliminate the next instruction from the instruction stream 18. In some embodiments, the instruction processing circuit 14 may utilize a synchronization flag 38 to indicate an occurrence of a synchronization event and determine whether a redundant synchronization barrier has been detected.

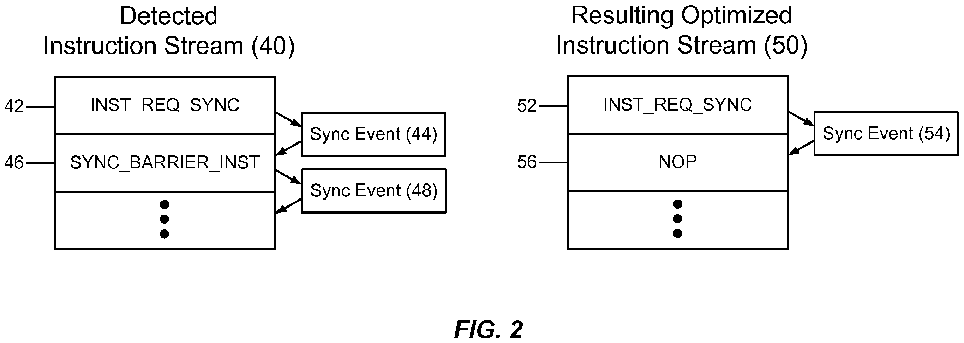

To provide an explanation of detecting and eliminating a redundant synchronization barrier in the processor-based system 10 in Figure 1, Figure 2 is provided. Figure 2 illustrates the instruction processing circuit 14 of Figure 1 detecting a synchronization event, and subsequently detecting a redundant synchronization barrier. In this example, a detected instruction stream 40 represents a series of instructions fetched in the instruction stream 18 and detected by the instruction processing circuit 14. First in the detected instruction stream 40 is an INST_REQ_SYNC instruction 42. The INST_REQ_SYNC instruction 42 may be any instruction indicating an operation for which the computer architecture requires software to expressly include a subsequent synchronization barrier, and for which the computer hardware is also permitted to perform a synchronization operation. In this example, the computer hardware carries out a synchronization operation in response to the INST_REQ_SYNC instruction 42, resulting in a synchronization event 44 being detected by the instruction processing circuit 14. In some embodiments, the synchronization event 44 may be a data synchronization operation, while some embodiments may provide that the synchronization event 44 is an instruction synchronization operation.

As noted above, the computer architecture requires the INST_REQ_SYNC instruction 42 to be followed by a software synchronization barrier. Accordingly, a SYNC_BARRIER_INST instruction 46 is detected next in the detected instruction stream 40 by the instruction processing circuit 14. The SYNC_BARRIER_INST instruction 46 is a synchronization barrier instruction that causes a synchronization event 48 to occur. The synchronization event 48 triggered by the SYNC_BARRIER_INST instruction 46 is of the same type as the synchronization event 44. As used herein, the "type" of a synchronization event refers to a general categorization of the synchronization event as, for example, a data synchronization operation or an instruction synchronization operation. A synchronization event may be considered a "full" synchronization event if it ensures barrier operations for both read and write operations, and applies to both inner- and outer-cacheable memory systems and both shareable and non-shareable memory. Alternatively, the synchronization event may be more limited in scope in that it ensures barrier operations only in narrow circumstances than a full synchronization event. It is to be understood that a synchronization event may be considered of the same type as a preceding synchronization event if the synchronization event belongs to the same general categorization and is of a same or narrower scope as the preceding synchronization event. In this example, note that because no other instruction executes after the synchronization event 44 and before the synchronization event 48, the synchronization event 48, and the SYNC_BARRIER_INST instruction 46 that triggered it, are redundant and may be eliminated by the instruction processing circuit 14.A resulting optimized instruction stream 50 illustrates one exemplary result of the process described above. The resulting optimized instruction stream 50 includes an INSTR_REQ_SYNC instruction 52 corresponding to the INSTR_REQ_SYNC instruction 42. Like the INST_REQ_SYNC instruction 42, the INST_REQ_SYNC instruction 52 is an instruction indicating an operation to be followed by a software synchronization barrier, and for which the computer hardware is also permitted to perform a synchronization operation. Accordingly, in this example, the computer hardware carries out a synchronization operation in response to the INST_REQ_SYNC instruction 52, resulting in a synchronization event 54. In some embodiments, the synchronization event 54 may be a data synchronization operation, while some embodiments may provide that the synchronization event 54 is an instruction synchronization operation. As seen in Figure 2, the SYNC_BARRIER_INST instruction 46 has been replaced in the resulting optimized instruction stream 50 with an NOP (no operation) instruction 56. Consequently, there is no redundant synchronization event immediately following the synchronization event 54, resulting in improved CPU performance and instruction throughput.

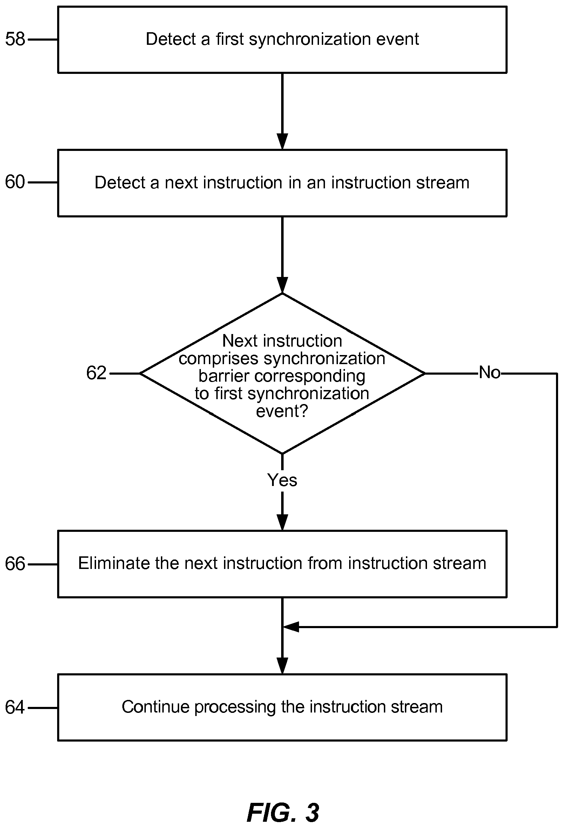

Figure 3 is provided to illustrate an exemplary process for detecting and eliminating a redundant synchronization barrier, with additional reference to Figures 1 and 2. In Figure 3, the exemplary process begins with the instruction processing circuit 14 detecting a first synchronization event, such as the synchronization event 44 of Figure 2 (block 58). In some embodiments, the first synchronization event may be a data synchronization operation, while some embodiments may provide that the first synchronization event is an instruction synchronization operation. The first synchronization event may result from the execution of an instruction, or may be caused by an unrelated operation such as an interrupt or an exception return.

The instruction processing circuit 14 then detects a next instruction in an instruction stream (block 60). The instruction processing circuit 14 determines whether the next instruction comprises a synchronization barrier of a type corresponding to the first synchronization event (block 62). For example, the instruction processing circuit 14 determines whether the first synchronization event and the next instruction are both considered data synchronization operations, or whether both are instruction synchronization operations. If the next instruction does not comprise a synchronization barrier of a type corresponding to the first synchronization event, processing of the instruction stream continues at block 64 of Figure 3. If the next instruction does comprise a synchronization barrier corresponding to the first synchronization event, the instruction processing circuit 14 eliminates the next instruction from the instruction stream (block 66). In some embodiments, eliminating the next instruction may include replacing the next instruction with an NOP instruction, while some embodiments may provide that eliminating the next instruction comprises removing the next instruction from the instruction stream. Processing of the instruction stream 18 then continues at block 64.

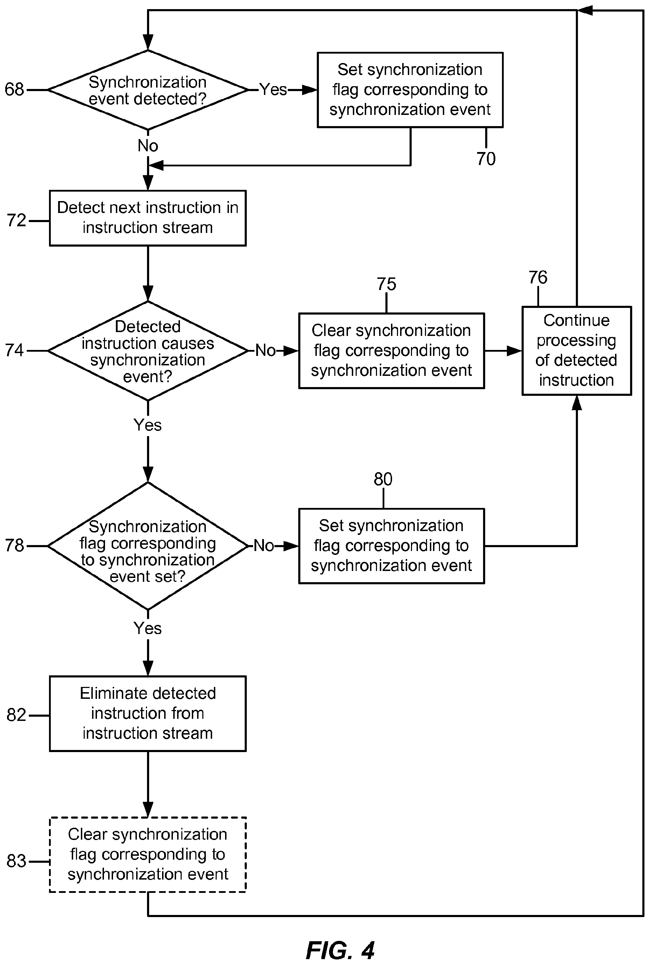

Figure 4 is a flowchart illustrating a more detailed exemplary process of an instruction processing circuit, such as the instruction processing circuit 14 of Figure 1, for eliminating redundant synchronization barriers. The exemplary process illustrated in Figure 4 begins with the instruction processing circuit determining whether a synchronization event has been detected (block 68). In some embodiments, the synchronization event may be a data synchronization operation, while some embodiments may provide that the synchronization event is an instruction synchronization operation. As noted above, a synchronization event may result from execution of an instruction, or may arise from an unrelated operation such as an interrupt or an exception return. Accordingly, detection of a synchronization event may be made by detecting an effect of the synchronization event, such as a pipeline flush, and/or by comparing a detected instruction to a list of instructions known to trigger a synchronization event.

If a synchronization event is detected at block 68, a synchronization flag corresponding to a type of the synchronization event (e.g., data synchronization or instruction synchronization) is set (block 70). The synchronization flag indicates whether a synchronization event occurred immediately prior to execution of a next instruction. Some embodiments may provide that the synchronization flag indicates the occurrence of a data synchronization event, while in some embodiments the synchronization flag corresponds to an occurrence of an instruction synchronization event. Processing then resumes at block 72 of Figure 4. If no synchronization event is detected at block 68, processing returns to block 72.

The instruction processing circuit then detects a next instruction in an instruction stream, such as the instruction stream 18 (block 72). The instruction processing circuit determines whether a synchronization event, for example the synchronization event 44 of Figure 2, is caused by the detected instruction (block 74). In some embodiments, the synchronization event may be a data synchronization operation, while some embodiments may provide that the synchronization event is an instruction synchronization operation.

If the instruction processing circuit determines at block 74 of Figure 4 that the detected instruction does not cause a synchronization event, the instruction processing circuit clears the synchronization flag that corresponds to a type of synchronization event (e.g., data synchronization or instruction synchronization) (block 75) if it was set previously (for example, in block 70), and continues processing of the detected instruction continues (block 76). The instruction processing circuit then returns to block 68. If the instruction processing circuit determines at block 74 that a synchronization event is caused by the detected instruction, the instruction processing circuit next evaluates whether the detected instruction is a redundant synchronization barrier. To do so, the instruction processing circuit examines whether the synchronization flag corresponding to the type of the synchronization event (e.g., data synchronization or instruction synchronization) is set (block 78). If the synchronization flag is not set, then a synchronization event of appropriate type and scope did not occur immediately prior to the detected instruction, and therefore the detected instruction is not a redundant synchronization barrier. Accordingly, the synchronization flag is set to indicate that a synchronization event was caused by the detected instruction (block 80), and processing of the detected instruction continues at block 76. Afterwards, the instruction processing circuit returns to block 68.

If, at decision block 78 of Figure 4, the instruction processing circuit determines that the synchronization flag corresponding to the synchronization event is set, the detected instruction has been identified as a redundant synchronization barrier. The instruction processing circuit thus eliminates the detected instruction from the instruction stream (block 82). In some embodiments, the instruction processing circuit may eliminate the detected instruction by replacing the detected instruction with an NOP instruction, such as the NOP instruction 56 of Figure 2, in the instruction stream, while some embodiments may provide that the detected instruction is removed entirely from the instruction stream. It is to be understood that, in some embodiments, the occurrence of more than two consecutive instructions resulting in synchronization events of the same type may be unlikely. Accordingly, in such embodiments, the instruction processing circuit may clear the synchronization flag corresponding to the synchronization event upon eliminating the detected instruction from the instruction stream (block 83). In embodiments where the occurrence of more than two consecutive instructions triggering a synchronization event of the same type is possible, the operations of block 83 may be omitted.

It is to be understood that operations for detecting the detected instruction and the synchronization event may be carried out by, for example, the synchronization event detection circuit 34 of the instruction processing circuit 14 of Figure 1. It is to be further understood that operations for detecting and eliminating a redundant synchronization barrier may be carried out by, for example, the optimization circuit 36 of the instruction processing circuit 14 of Figure 1.

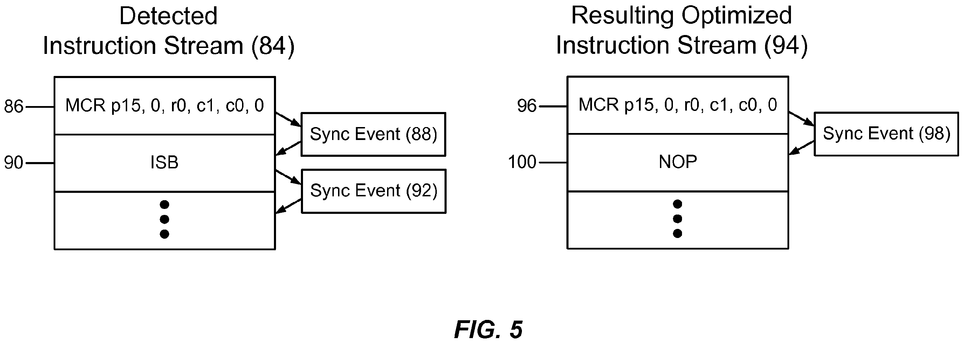

To illustrate optimization of an exemplary instruction stream containing an instruction triggering a synchronization event and a redundant synchronization barrier, Figure 5 is provided. In this example, a detected instruction stream 84 represents a series of instructions fetched in the instruction stream 18 and detected by the instruction processing circuit 14. First in the detected instruction stream 84 is an ARM architecture MCR ("Move to coprocessor from ARM register(s)") instruction 86. The MCR instruction 86 is an instruction indicating an operation to write a value to translation table base register 0 (TTBR0), which, in a computer employing the ARM architecture, stores a physical address of a translation table. Because subsequent instructions that follow the MCR instruction 86 rely on the TTBR0 to accurately map virtual addresses to physical memory addresses, execution of the MCR instruction 86 must successfully complete before the subsequent instruction execute. Thus, the ARM architecture requires that the MCR instruction 86 be followed by a software instruction synchronization operation. In some embodiments, however, the computer hardware may also be permitted to perform an instruction synchronization operation after execution of the MCR instruction 86. Accordingly, in this example, the computer hardware automatically initiates a synchronization operation in response to execution of the MCR instruction 86, resulting in a synchronization event 88.

As noted above, the ARM architecture requires the MCR instruction 86 to be followed by a software instruction synchronization operation. Thus, an ARM architecture ISB ("instruction synchronization barrier") instruction 90 is detected next in the detected instruction stream 84. The ISB instruction 90 is a synchronization barrier instruction that causes a synchronization event 92 to occur. The synchronization event 92 triggered by the ISB instruction 90 is of the same type (i.e., an instruction synchronization operation having the same or narrower scope) as the synchronization event 88. Note that because no other instruction executes after the synchronization event 88 and before the synchronization event 92, the synchronization event 92, and the ISB instruction 90 that triggered it, are redundant and may be eliminated by the instruction processing circuit 14.

A resulting optimized instruction stream 94 illustrates one exemplary result. The resulting optimized instruction stream 94 includes an MCR instruction 96 corresponding to the MCR instruction 86. In response to execution of the MCR instruction 96, the computer hardware carries out an instruction synchronization operation, resulting in a synchronization event 98. However, the ISB instruction 90 has been replaced in this instance by an NOP instruction 100 in the resulting optimized instruction stream 94. Thus, there is no redundant synchronization event immediately following the synchronization event 98, resulting in improved CPU performance and instruction throughput.

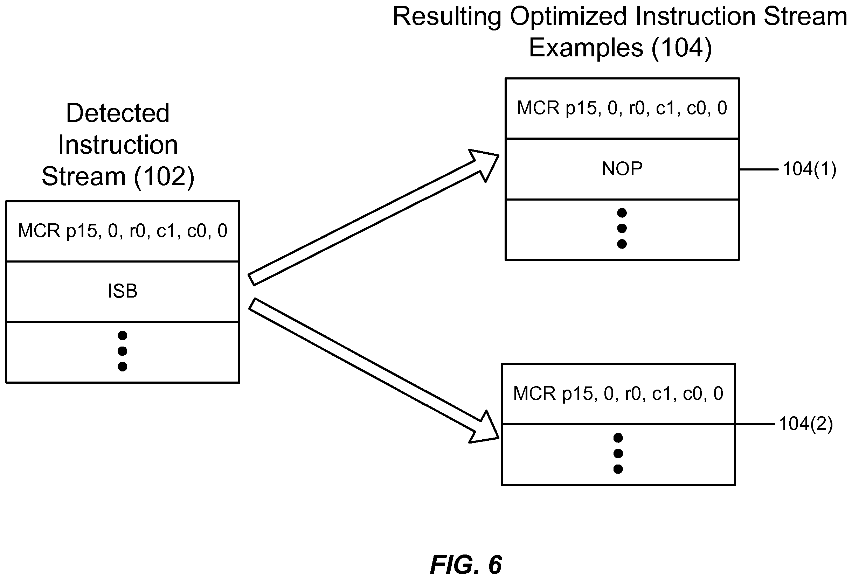

As noted above with respect to Figure 4, a redundant synchronization barrier may be eliminated from the instruction stream 18 by the instruction processing circuit 14 of Figure 1. The instruction processing circuit 14 may eliminate the redundant synchronization barrier by replacing it with an NOP instruction indicating no operation, or by removing it entirely from the instruction stream 18. Thus, the instruction processing circuit 14 may process a given detected instruction stream into different resulting instruction streams. In this regard, Figure 6 shows an exemplary detected instruction stream 102 including a redundant synchronization barrier, and corresponding resulting optimized instruction stream examples 104(1) and 104(2) that may be generated by the instruction processing circuit 14. In this example, the detected instruction stream 102 includes two ARM architecture instructions: an MCR instruction that indicates an operation to write a value to TTBR0, followed by an ISB synchronization barrier instruction that triggers an instruction synchronization event.

Resulting optimized instruction stream examples 104 illustrate exemplary sequences of instructions into which the instructions in the detected instruction stream 102 may be processed by the instruction processing circuit 14 of Figure 1. In some embodiments, the ISB instruction in the detected instruction stream 102 may be replaced with an instruction indicating no operation (i.e., NOP). Accordingly, exemplary instruction stream 104(1) comprises the MCR instruction followed by an NOP instruction. In contrast, some embodiments described herein provide that the ISB instruction in the detected instruction stream 102 will be removed entirely from the instruction stream 18. Accordingly, instruction stream 104(2) comprises only the MCR instruction.

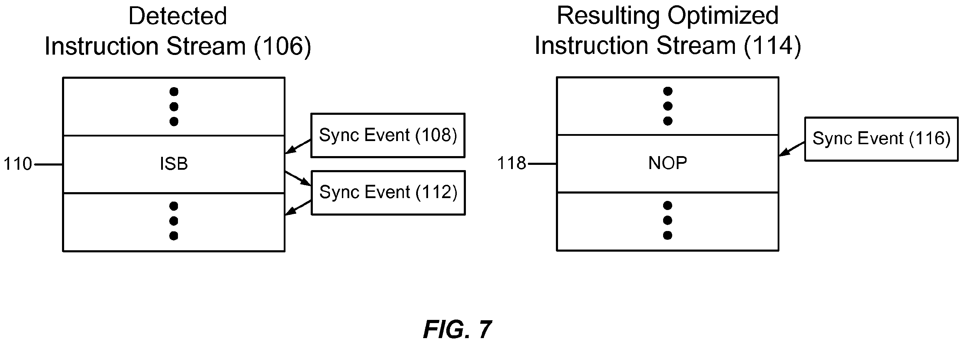

As discussed above, a synchronization event preceding a software synchronization barrier may result from operations unrelated to instruction execution, such as an interrupt or an exception return. In this regard, Figure 7 illustrates optimization of an exemplary instruction stream containing a redundant synchronization barrier. In this example, a detected instruction stream 106 represents a series of instructions fetched in the instruction stream 18 and detected by the instruction processing circuit 14 of Figure 1. As the instructions in the detected instruction stream 106 are being processed, a synchronization event 108 occurs in response to an operation such as an interrupt or an exception return. Immediately following the synchronization event 108, an ARM architecture ISB instruction 110 is detected in the detected instruction stream 106. The ISB instruction 110 is a synchronization barrier instruction that causes a synchronization event 112 to occur. The synchronization event 112 triggered by the ISB instruction 110 is of the same type (i.e., an instruction synchronization operation having the same or narrower scope) as the synchronization event 108. Note that because no other instruction executes after the synchronization event 108 and before the synchronization event 112, the synchronization event 112, and the ISB instruction 110 that triggered it, are redundant and may be eliminated by the instruction processing circuit 14.

A resulting optimized instruction stream 114 illustrates one exemplary result. As the resulting optimized instruction stream 114 is being processed, a synchronization event 116 occurs in response to an operation such as an interrupt or an exception return. However, the ISB instruction 110 has been replaced in this instance by an NOP instruction 118 in the resulting optimized instruction stream 114. Thus, there is no redundant synchronization event immediately following the synchronization event 116, resulting in improved CPU performance and instruction throughput.

Eliminating redundant synchronization barriers from execution pipelines in instruction processing circuits, and related processor systems, methods, and computer-readable media according to embodiments disclosed herein may be provided in or integrated into any processor-based device. Examples, without limitation, include a set top box, an entertainment unit, a navigation device, a communications device, a fixed location data unit, a mobile location data unit, a mobile phone, a cellular phone, a computer, a portable computer, a desktop computer, a personal digital assistant (PDA), a monitor, a computer monitor, a television, a tuner, a radio, a satellite radio, a music player, a digital music player, a portable music player, a digital video player, a video player, a digital video disc (DVD) player, and a portable digital video player.

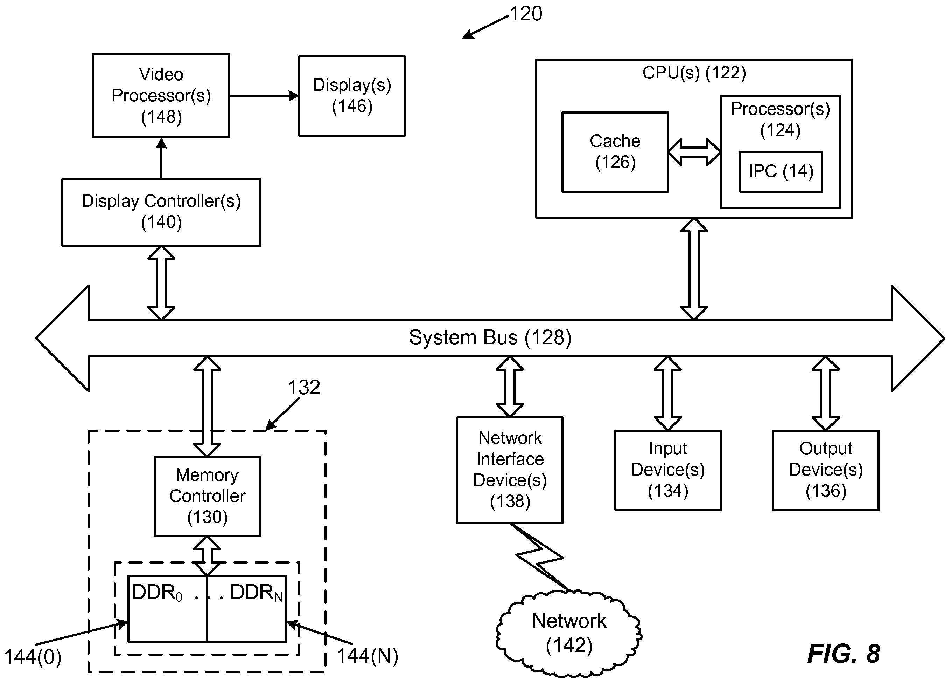

In this regard, Figure 8 illustrates an example of a processor-based system 120 that can employ the instruction processing circuit 14 of Figure 1. In this example, the processor-based system 120 includes one or more CPUs 122, each including one or more processors 124. The one or more processors 124 may comprise the instruction processing circuit (IPC) 14. The CPU(s) 122 may have cache memory 126 coupled to the processor(s) 124 for rapid access to temporarily stored data. The CPU(s) 122 is coupled to a system bus 128 and can intercouple master and slave devices included in the processor-based system 120. As is well known, the CPU(s) 122 communicates with these other devices by exchanging address, control, and data information over the system bus 128. For example, the CPU(s) 122 can communicate bus transaction requests to a memory controller 130 as an example of a slave device. Although not illustrated in Figure 8, multiple system buses 128 could be provided.

Other master and slave devices can be connected to the system bus 128. As illustrated in Figure 8, these devices can include a memory system 132 comprising the memory controller 130 coupled to a plurality of DDR devise 144(0)-144(N), one or more input devices 134, one or more output devices 136, one or more network interface devices 138, and one or more display controllers 140, as examples. The input device(s) 134 can include any type of input device, including but not limited to input keys, switches, voice processors, etc. The output device(s) 136 can include any type of output device, including but not limited to audio, video, other visual indicators, etc. The network interface device(s) 138 can be any device configured to allow exchange of data to and from a network 142. The network 142 can be any type of network, including but not limited to a wired or wireless network, a private or public network, a local area network (LAN), a wide local area network (WLAN), and the Internet. The network interface device(s) 138 can be configured to support any type of communication protocol desired. The memory system 132 can include one or more memory units 144(0-N).

The CPU(s) 122 may also be configured to access the display controller(s) 140 over the system bus 128 to control information sent to one or more displays 146. The display controller(s) 140 sends information to the display(s) 146 to be displayed via one or more video processors 148, which process the information to be displayed into a format suitable for the display(s) 146. The display(s) 146 can include any type of display, including but not limited to a cathode ray tube (CRT), a liquid crystal display (LCD), a plasma display, etc.

Those of skill in the art will further appreciate that the various illustrative logical blocks, modules, circuits, and algorithms described in connection with the embodiments disclosed herein may be implemented as electronic hardware, instructions stored in memory or in another computer-readable medium and executed by a processor or other processing device, or combinations of both. The arbiters, master devices, and slave devices described herein may be employed in any circuit, hardware component, integrated circuit (IC), or IC chip, as examples. Memory disclosed herein may be any type and size of memory and may be configured to store any type of information desired. To clearly illustrate this interchangeability, various illustrative components, blocks, modules, circuits, and steps have been described above generally in terms of their functionality. How such functionality is implemented depends upon the particular application, design choices, and/or design constraints imposed on the overall system. Skilled artisans may implement the described functionality in varying ways for each particular application, but such implementation decisions should not be interpreted as causing a departure from the scope of the present disclosure.

The various illustrative logical blocks, modules, and circuits described in connection with the embodiments disclosed herein may be implemented or performed with a processor, a DSP, an Application Specific Integrated Circuit (ASIC), an FPGA or other programmable logic device, discrete gate or transistor logic, discrete hardware components, or any combination thereof designed to perform the functions described herein. A processor may be a microprocessor, but in the alternative, the processor may be any conventional processor, controller, microcontroller, or state machine. A processor may also be implemented as a combination of computing devices, e.g., a combination of a DSP and a microprocessor, a plurality of microprocessors, one or more microprocessors in conjunction with a DSP core, or any other such configuration.

The embodiments disclosed herein may be embodied in hardware and in instructions that are stored in hardware, and may reside, for example, in Random Access Memory (RAM), flash memory, Read Only Memory (ROM), Electrically Programmable ROM (EPROM), Electrically Erasable Programmable ROM (EEPROM), registers, a hard disk, a removable disk, a CD-ROM, or any other form of computer readable medium known in the art. An exemplary storage medium is coupled to the processor such that the processor can read information from, and write information to, the storage medium. In the alternative, the storage medium may be integral to the processor. The processor and the storage medium may reside in an ASIC. The ASIC may reside in a remote station. In the alternative, the processor and the storage medium may reside as discrete components in a remote station, base station, or server.

It is also noted that the operational steps described in any of the exemplary embodiments herein are described to provide examples and discussion. The operations described may be performed in numerous different sequences other than the illustrated sequences. Furthermore, operations described in a single operational step may actually be performed in a number of different steps. Additionally, one or more operational steps discussed in the exemplary embodiments may be combined. It is to be understood that the operational steps illustrated in the flow chart diagrams may be subject to numerous different modifications as will be readily apparent to one of skill in the art. Those of skill in the art will also understand that information and signals may be represented using any of a variety of different technologies and techniques. For example, data, instructions, commands, information, signals, bits, symbols, and chips that may be referenced throughout the above description may be represented by voltages, currents, electromagnetic waves, magnetic fields or particles, optical fields or particles, or any combination thereof.

The previous description of the disclosure is provided to enable any person skilled in the art to make or use the disclosure. Various modifications to the disclosure will be readily apparent to those skilled in the art, and the generic principles defined herein may be applied to other variations without departing from the scope of the disclosure. Thus, the disclosure is not intended to be limited to the examples and designs described herein, but is to be accorded the widest scope consistent with the principles and novel features disclosed herein.

## Claims

1. A method for eliminating redundant synchronization barriers in an instruction stream, comprising:
detecting a first instruction (86) indicating an operation for which a computer architecture requires a subsequent synchronization barrier and for which the computer architecture permits a synchronization operation to be automatically performed by computer hardware;
automatically performing, by the computer hardware, the synchronization operation responsive to the first instruction;
detecting a first synchronization event (88) resulting from the synchronization operation being automatically performed by the computer hardware responsive to the first instruction (86);
detecting the next instruction (90) following the first instruction in the instruction stream;
determining whether the next instruction (90) comprises a synchronization barrier configured to cause a synchronization event (92) of a type corresponding to the first synchronization event (86); and
responsive to determining that the next instruction (90) comprises a synchronization barrier configured to cause a synchronization event (92) of a type corresponding to the first synchronization event (88), eliminating the next instruction from the instruction stream.

2. The method of claim 1, wherein detecting the first synchronization event comprises detecting an instruction synchronization event; and
wherein determining whether the next instruction comprises a synchronization barrier configured to cause a synchronization event of a type corresponding to the first synchronization event comprises detecting whether the next instruction is an instruction synchronization barrier.

3. The method of claim 1, wherein detecting the first synchronization event comprises detecting a data synchronization event; and
wherein determining whether the next instruction comprises a synchronization barrier configured to cause a synchronization event of a type corresponding to the first synchronization event comprises detecting whether the next instruction is a data synchronization barrier.

4. The method of claim 1, wherein detecting the first synchronization event comprises setting a synchronization flag.

5. The method of claim 4, further comprising clearing the synchronization flag responsive to determining that the next instruction does not comprise a synchronization barrier configured to cause a synchronization event of a type corresponding to the first synchronization event.

6. The method of claim 4, wherein determining whether the next instruction comprises a synchronization barrier configured to cause a synchronization event of a type corresponding to the first synchronization event comprises determining whether the synchronization flag is set.

7. The method of claim 1, wherein eliminating the next instruction from the instruction stream comprises replacing the next instruction in the instruction stream with an instruction indicating no operation.

8. The method of claim 1, wherein eliminating the next instruction from the instruction stream comprises removing the next instruction from the instruction stream.

9. An instruction processing circuit, comprising:
a synchronization event detection circuit configured to:
detect a first instruction (86) indicating an operation for which a computer architecture requires a subsequent synchronization barrier and for which the computer architecture permits a synchronization operation to be automatically performed by computer hardware;
automatically perform, by the computer hardware, the synchronization operation responsive to the first instruction;
detect a first synchronization event resulting from the synchronization operation being automatically performed by the computer hardware responsive to the first instruction (86); and
an optimization circuit configured to:
detect the next instruction (90) following the first instruction in the instruction stream;
determine whether the next instruction comprises a synchronization barrier configured to cause a synchronization event (92) of a type corresponding to the first synchronization event; and
responsive to determining that the next instruction comprises a synchronization barrier configured to cause a synchronization event (92) of a type corresponding to the first synchronization event, eliminate the next instruction from the instruction stream.

10. The instruction processing circuit of claim 9, wherein the synchronization event detection circuit is further configured to set a synchronization flag responsive to detecting the first synchronization event.

11. The instruction processing circuit of claim 9, wherein the optimization circuit is configured to eliminate the next instruction from the instruction stream by replacing the next instruction in the instruction stream with an instruction indicating no operation.

12. The instruction processing circuit of claim 10, wherein the optimization circuit is further configured to clear the synchronization flag responsive to determining that the next instruction does not comprise a synchronization barrier configured to cause a synchronization event of a type corresponding to the first synchronization event.

13. The instruction processing circuit of claim 10, wherein the optimization circuit is configured to determine whether the next instruction comprises a synchronization barrier configured to cause a synchronization event of a type corresponding to the first synchronization event by being configured to determine whether the synchronization flag is set.

14. The instruction processing circuit of claim 9, wherein the next instruction is an ARM instruction selected from the group consisting of: an ISB (instruction synchronization barrier) instruction, a DSB (data synchronization barrier) instruction, and a DMB (data memory barrier) instruction.

15. A non-transitory computer-readable medium having stored thereon computer-executable instructions to cause a processor to implement a method, comprising:
detecting a first instruction (86) indicating an operation for which a computer architecture requires a subsequent synchronization barrier and for which the computer architecture permits a synchronization operation to be automatically performed by computer hardware;
automatically performing, by the computer hardware, the synchronization operation responsive to the first instruction;
detecting a first synchronization event resulting from the synchronization operation being automatically performed by the computer hardware responsive to the first instruction (86);
detecting the next instruction following the first instruction in the instruction stream;
determining whether the next instruction comprises a synchronization barrier configured to cause a synchronization event of a type corresponding to the first synchronization event; and
responsive to determining that the next instruction comprises a synchronization barrier configured to cause a synchronization event of a type corresponding to the first synchronization event, eliminating the next instruction from the instruction stream.

## Patentansprüche

1. Ein Verfahren zum Eliminieren redundanter Synchronisationsbarrieren in einem Befehlsstrom, das Folgendes aufweist:
Detektieren eines ersten Befehls (86), der eine Operation anzeigt, für welche eine Computerarchitektur eine nachfolgende Synchronisationsbarriere erfordert und für welche die Computerarchitektur gestattet, dass eine Synchronisationsoperation automatisch durch Computerhardware durchgeführt wird;
automatisches Durchführen, durch die Computerhardware, der Synchronisationsoperation ansprechend auf den ersten Befehl;
Detektieren eines ersten Synchronisationsereignisses (88), das sich aus der Synchronisationsoperation, die automatisch durch die Computerhardware ansprechend auf den ersten Befehl (86) durchgeführt wird, ergibt;
Detektieren des nächsten Befehls (90) nachfolgend auf den ersten Befehl in dem Befehlsstrom;
Bestimmen, ob der nächste Befehl (90) eine Synchronisationsbarriere aufweist, die konfiguriert ist ein Synchronisationsereignis (92) eines Typs entsprechend dem ersten Synchronisationsereignis (86) zu veranlassen; und
ansprechend auf Bestimmen, dass der nächste Befehl (90) eine Synchronisationsbarriere aufweist, die konfiguriert ist ein Synchronisationsereignis (92) eines Typs zu veranlassen, der dem ersten Synchronisationsereignis (88) entspricht, Eliminieren des nächsten Befehls aus dem Befehlsstrom.

2. Verfahren nach Anspruch 1, wobei das Detektieren des ersten Synchronisationsereignisses Detektieren eines Befehlssynchronisationsereignisses aufweist; und
wobei das Bestimmen, ob der nächste Befehl eine Synchronisationsbarriere aufweist, die konfiguriert ist ein Synchronisationsereignis eines Typs zu veranlassen, der dem ersten Synchronisationsereignis entspricht, Detektieren aufweist, ob der nächste Befehl eine Befehlssynchronisationsbarriere ist.

3. Verfahren nach Anspruch 1, wobei das Detektieren des ersten Synchronisationsereignisses Detektieren eines Datensynchronisationsereignisses aufweist; und
wobei das Bestimmen, ob der nächste Befehl eine Synchronisationsbarriere aufweist, die konfiguriert ist ein Synchronisationsereignis eines Typs zu veranlassen, der dem ersten Synchronisationsereignis entspricht, Detektieren aufweist, ob der nächsten Befehl eine Datensynchronisationsbarriere ist.

4. Verfahren nach Anspruch 1, wobei das Detektieren des ersten Synchronisationsereignisses Setzen eines Synchronisations-Flags aufweist.

5. Verfahren nach Anspruch 4, das weiter Löschen des Synchronisations-Flags ansprechend auf Bestimmen aufweist, dass der nächste Befehl keine Synchronisationsbarriere aufweist, die konfiguriert ist ein Synchronisationsereignis eines Typs zu veranlassen, der dem ersten Synchronisationsereignis entspricht.

6. Verfahren nach Anspruch 4, wobei das Bestimmen, ob der nächste Befehl eine Synchronisationsbarriere aufweist, die konfiguriert ist ein Synchronisationsereignis eines Typs zu veranlassen, der dem ersten Synchronisationsereignis entspricht, Bestimmen aufweist, ob das Synchronisations-Flag gesetzt ist.

7. Verfahren nach Anspruch 1, wobei das Eliminieren des nächsten Befehls aus dem Befehlsstrom Ersetzen des nächsten Befehls in dem Befehlsstrom durch einen Befehl aufweist, der keine Operation anzeigt.

8. Verfahren nach Anspruch 1, wobei das Eliminieren des nächsten Befehls aus dem Befehlsstrom Entfernen des nächsten Befehls aus dem Befehlsstrom aufweist.

9. Eine Befehlsverarbeitungsschaltung, die Folgendes aufweist:
eine Synchronisationsereignisdetektionsschaltung, die konfiguriert ist zum:
Detektieren eines ersten Befehls (86), der eine Operation anzeigt, für welche eine Computerarchitektur eine nachfolgende Synchronisationsbarriere erfordert und für welche die Computerarchitektur gestattet, dass eine Synchronisationsoperation automatisch durch Computerhardware durchgeführt wird;
automatisches Durchführen, durch die Computerhardware, der Synchronisationsoperation ansprechend auf den ersten Befehl;
Detektieren eines ersten Synchronisationsereignisses, das sich aus der Synchronisationsoperation, die automatisch durch die Computerhardware ansprechend auf den ersten Befehl (86) durchgeführt wird, ergibt; und
eine Optimierungsschaltung, die konfiguriert ist zum:
Detektieren des nächsten Befehls (90) nachfolgend auf den ersten Befehl in dem Befehlsstrom;
Bestimmen, ob der nächste Befehl eine Synchronisationsbarriere aufweist, die konfiguriert ist ein Synchronisationsereignis (92) eines Typs, der dem ersten Synchronisationsereignis entspricht, zu veranlassen; und
ansprechend auf Bestimmen, dass der nächste Befehl eine Synchronisationsbarriere aufweist, die konfiguriert ist ein Synchronisationsereignis (92) eines Typs zu veranlassen, der dem ersten Synchronisationsereignis entspricht, Eliminieren des nächsten Befehls aus dem Befehlsstrom.

10. Befehlsverarbeitungsschaltung nach Anspruch 9, wobei die Synchronisationsereignisdetektionsschaltung weiter konfiguriert ist zum Setzen eines Synchronisations-Flags ansprechend auf Detektieren des ersten Synchronisationsereignisses.

11. Befehlsverarbeitungsschaltung nach Anspruch 9, wobei die Optimierungsschaltung konfiguriert ist zum Eliminieren des nächsten Befehls aus dem Befehlsstrom durch Ersetzen des nächsten Befehls in dem Befehlsstrom durch einen Befehl, der keine Operation anzeigt.

12. Befehlsverarbeitungsschaltung nach Anspruch 10, wobei die Optimierungsschaltung weiter konfiguriert ist zum Löschen des Synchronisations-Flags ansprechend auf Bestimmen, dass der nächste Befehl keine Synchronisationsbarriere aufweist, die konfiguriert ist ein Synchronisationsereignis eines Typs, der dem ersten Synchronisationsereignis entspricht, zu veranlassen.

13. Befehlsverarbeitungsschaltung nach Anspruch 10, wobei die Optimierungsschaltung weiter konfiguriert ist zum Bestimmen, ob der nächste Befehl eine Synchronisationsbarriere aufweist, die konfiguriert ist ein Synchronisationsereignis eines Typs, der dem ersten Synchronisationsereignis entspricht, zu veranlassen indem sie konfiguriert ist, zu bestimmen, ob das Synchronisations-Flag gesetzt ist.

14. Befehlsverarbeitungsschaltung nach Anspruch 9, wobei der nächste Befehl ein ARM-Befehl ist, der aus der Gruppe ausgewählt ist, die aus Folgenden besteht: einem ISB-Befehl (ISB = instruction synchronization barrier bzw. Befehlssynchronisationsbarriere), einem DSB-Befehl (DSB = data synchronization barrier bzw. Datensynchronisationsbarriere) und einem DMB-Befehl (DMB = data memory barrier bzw. Datenspeicherbarriere).

15. Ein nicht transitorisches computerlesbares Medium mit darauf gespeicherten von einem Computer ausführbaren Instruktionen zum Veranlassen eines Prozessors, ein Verfahren zu implementieren, das Folgendes aufweist:
Detektieren eines ersten Befehls (86), der eine Operation anzeigt, für welche eine Computerarchitektur eine nachfolgende Synchronisationsbarriere erfordert und für welche die Computerarchitektur gestattet, dass eine Synchronisationsoperation automatisch durch Computerhardware durchgeführt wird;
automatisches Durchführen, durch die Computerhardware, der Synchronisationsoperation ansprechend auf den ersten Befehl;
Detektieren eines ersten Synchronisationsereignisses, das sich aus der Synchronisationsoperation, die automatisch durch die Computerhardware ansprechend auf den ersten Befehl (86) durchgeführt wird, ergibt;
Detektieren des nächsten Befehls nachfolgend auf den ersten Befehl in dem Befehlsstrom;
Bestimmen, ob der nächste Befehl eine Synchronisationsbarriere aufweist, die konfiguriert ist ein Synchronisationsereignis eines Typs entsprechend dem ersten Synchronisationsereignis zu veranlassen; und
ansprechend auf Bestimmen, dass der nächste Befehl eine Synchronisationsbarriere aufweist, die konfiguriert ist ein Synchronisationsereignis eines Typs zu veranlassen, der dem ersten Synchronisationsereignis entspricht, Eliminieren des nächsten Befehls aus dem Befehlsstrom.

## Revendications

1. Procédé d'élimination de barrières de synchronisation redondantes dans un flux d'instructions, comprenant :
la détection d'une première instruction (86) indiquant une opération pour laquelle une architecture informatique nécessite une barrière de synchronisation ultérieure et pour laquelle l'architecture informatique permet d'effectuer automatiquement une opération de synchronisation à l'aide d'un matériel informatique ;
la réalisation automatique, par le matériel informatique, de l'opération de synchronisation en réponse à la première instruction ;
la détection d'un premier événement de synchronisation (88) résultant de l'opération de synchronisation effectuée automatiquement par le matériel informatique en réponse à la première instruction (86) ;
la détection de l'instruction suivante (90) qui suit la première instruction dans le flux d'instructions ;
la détermination si l'instruction suivante (90) comprend une barrière de synchronisation conçue pour provoquer un événement de synchronisation (92) d'un type correspondant au premier événement de synchronisation (86) ; et
en réponse à la détermination que l'instruction suivante (90) comprend une barrière de synchronisation conçue pour provoquer un événement de synchronisation (92) d'un type correspondant au premier événement de synchronisation (88), élimination de l'instruction suivante du flux d'instructions.

2. Procédé selon la revendication 1, dans lequel la détection du premier événement de synchronisation comprend la détection d'un événement de synchronisation d'instructions ; et
dans lequel la détermination si l'instruction suivante comprend une barrière de synchronisation conçue pour provoquer un événement de synchronisation d'un correspondant au premier événement de synchronisation comprend la détection si l'instruction suivante est une barrière de synchronisation d'instructions.

3. Procédé selon la revendication 1, dans lequel la détection du premier événement de synchronisation comprend la détection d'un événement de synchronisation de données ; et
dans lequel la détermination si l'instruction suivante comprend une barrière de synchronisation conçue pour provoquer un événement de synchronisation d'un correspondant au premier événement de synchronisation comprend la détection si l'instruction suivante est une barrière de synchronisation de données.

4. Procédé selon la revendication 1, dans lequel la détection du premier événement de synchronisation comprend l'activation d'un drapeau de synchronisation.

5. Procédé selon la revendication 4, comprenant en outre la suppression du drapeau de synchronisation en réponse à la détermination que l'instruction suivante ne comprend pas de barrière de synchronisation conçue pour provoquer un événement de synchronisation d'un type correspondant au premier événement de synchronisation.

6. Procédé selon la revendication 4, dans lequel la détermination si l'instruction suivante comprend une barrière de synchronisation conçu pour provoquer un événement de synchronisation d'un type correspondant au premier événement de synchronisation comprend la détermination si le drapeau de synchronisation est activé.

7. Procédé selon la revendication 1, dans lequel l'élimination de l'instruction suivante du flux d'instructions comprend le remplacement de l'instruction suivante dans le flux d'instructions par une instruction n'indiquant aucune opération.

8. Procédé selon la revendication 1, dans lequel l'élimination de l'instruction suivante du flux d'instructions comprend la suppression de l'instruction suivante du flux d'instructions.

9. Circuit de traitement d'instructions comprenant :
un circuit de détection d'événement de synchronisation conçu pour :
la détection d'une première instruction (86) indiquant une opération pour laquelle une architecture informatique nécessite une barrière de synchronisation ultérieure et pour laquelle l'architecture informatique permet d'effectuer automatiquement une opération de synchronisation à l'aide d'un matériel informatique ;
la réalisation automatique, par le matériel informatique, de l'opération de synchronisation en réponse à la première instruction ;
la détection d'un premier événement de synchronisation résultant de l'opération de synchronisation effectuée automatiquement par le matériel informatique en réponse à la première instruction (86) ; et
un circuit d'optimisation conçu pour :
la détection de l'instruction suivante (90) qui suit la première instruction dans le flux d'instructions ;
la détermination si l'instruction suivante (90) comprend une barrière de synchronisation conçue pour provoquer un événement de synchronisation (92) d'un type correspondant au premier événement de synchronisation ; et
en réponse à la détermination que l'instruction suivante comprend une barrière de synchronisation conçue pour provoquer un événement de synchronisation (92) d'un type correspondant au premier événement de synchronisation, élimination de l'instruction suivante du flux d'instructions.

10. Circuit de traitement d'instructions selon la revendication 9, dans lequel le circuit de détection d'événement de synchronisation est en outre conçu pour activer un drapeau de synchronisation en réponse à la détection du premier événement de synchronisation.

11. Circuit de traitement d'instructions selon la revendication 9, dans lequel le circuit d'optimisation est conçu pour éliminer l'instruction suivante du flux d'instructions en remplaçant l'instruction suivante dans le flux d'instructions par une instruction n'indiquant aucune opération.

12. Circuit de traitement d'instructions selon la revendication 10, dans lequel le circuit d'optimisation est en outre conçu pour supprimer le drapeau de synchronisation n réponse à la détermination que l'instruction suivante ne comprend pas de barrière de synchronisation conçue pour provoquer un événement de synchronisation d'un type correspondant au premier événement de synchronisation.

13. Circuit de traitement d'instructions selon la revendication 10, dans lequel le circuit d'optimisation est conçu pour déterminer si l'instruction suivante comprend une barrière de synchronisation conçue pour provoquer un événement de synchronisation d'un type correspondant au premier événement de synchronisation en étant conçu pour déterminer si le drapeau de synchronisation est activé.

14. Circuit de traitement d'instructions selon la revendication 9, dans lequel l'instruction suivante est une instruction ARM sélectionné dans le groupe constitué d'une instruction ISB (barrière de synchronisation d'instructions), d'une instruction DSB (barrière de synchronisation de données) et d'une instruction DMB (barrière de mémoire de données).

15. Support non transitoire lisible par un ordinateur comprenant des instructions exécutables par un ordinateur stockées à l'intérieur, permettant de faire en sorte qu'un processeur implémente un procédé, comprenant :
la détection d'une première instruction (86) indiquant une opération pour laquelle une architecture informatique nécessite une barrière de synchronisation ultérieure et pour laquelle l'architecture informatique permet d'effectuer automatiquement une opération de synchronisation à l'aide d'un matériel informatique ;
la réalisation automatique, par le matériel informatique, de l'opération de synchronisation en réponse à la première instruction ;
la détection d'un premier événement de synchronisation résultant de l'opération de synchronisation effectuée automatiquement par le matériel informatique en réponse à la première instruction (86) ;
la détection de l'instruction suivante qui suit la première instruction dans le flux d'instructions ;
la détermination si l'instruction suivante comprend une barrière de synchronisation conçue pour provoquer un événement de synchronisation d'un type correspondant au premier événement de synchronisation ; et
en réponse à la détermination que l'instruction suivante comprend une barrière de synchronisation conçue pour provoquer un événement de synchronisation d'un type correspondant au premier événement de synchronisation, élimination de l'instruction suivante du flux d'instructions.
